# EUROPÄISCHE PATENTSCHRIFT

(11) **EP 2 348 264 B1**
(45) Veröffentlichungstag und Bekanntmachung des Hinweises auf die Patenterteilung: **16.01.2013**
(21) Anmeldenummer: 10000453.0
(22) Anmeldetag: 19.01.2010
(51) Int. Cl.: F24J 2/52

(54) **Platte zur Errichtung einer Vorrichtung zur Anordnung von Solarpaneelen und/oder Wärmekollektoren auf einem Untergrund, eine daraus errichtete Vorrichtung, die Verwendung einer Platte sowie ein Verfahren zur Errichtung einer Vorrichtung zur Anordnung von Solarpaneelen und/oder Wärmekollektoren auf einem Untergrund**
Plate for constructing a device for assembling solar panels and/or heat collectors on a base, a device made of same, the use of a plate and a method for constructing a device for assembling solar panels and/or heat collectors on a base
Plaque destinée à la création d'un dispositif d'agencement de panneaux solaires et/ou de collecteurs de chaleur sur un substrat, dispositif ainsi créé, utilisation d'une plaque, ainsi que procédé de création d'un dispositif pour l'agencement de panneaux solaires et/ou de collecteurs solaires sur un substrat

(43) Veröffentlichungstag der Anmeldung: 27.07.2011
(73) Patentinhaber: Hafenbahn GmbH & Co. KG, 48431 Rheine (DE)
(72) Erfinder: Brinkmann, Manfred, 48431 Rheine (DE); Haase, Peer, 48429 RHEINE (DE)
(74) Vertreter: Berkenbrink, Kai-Oliver

(56) Entgegenhaltungen:
- EP-A1- 1 318 012
- DE-U1- 20 120 983
- DE-U1-202009 007 537
- FR-A1- 2 525 393
- JP-A- 2003 008 045
- US-A- 3 013 668
- US-A- 4 426 801
- US-A- 4 578 917
- US-A1- 2004 128 923

## Beschreibung

Die Erfindung betrifft eine Platte zur Errichtung einer Vorrichtung zur Anordnung von Solarpaneelen und/oder Wärmekollektoren auf einem Untergrund, eine daraus errichtete Vorrichtung, die Verwendung einer Platte sowie ein Verfahren zur Errichtung einer Vorrichtung zur Anordnung von Solarpaneelen und/oder Wärmekollektoren auf einem Untergrund.

Solarpaneele und/oder Wärmekollektoren werden bevorzugt schräg zu einer horizontalen Ebene angeordnet, so dass die Sonnenstrahlung in einem möglichst steilen Winkel auf die Solarpaneele und/oder Wärmekollektoren fällt.

Zur schrägen Anordnung von Solarpaneelen und/oder Wärmekollektoren auf einem Untergrund, insbesondere beispielsweise auf einem Flachdach, werden daher solche Vorrichtungen benötigt, an denen die Solarpaneele und/oder Wärmekollektoren in einer schrägen Stellung anordenbar sind. Mittel zur Errichtung entsprechender Vorrichtungen sind aus dem Stand der Technik bekannt. Übliche Mittel zur Errichtung solcher Vorrichtungen umfassen üblicherweise ein erstes, insbesondere rahmenartiges Vorrichtungsteil, das auf einen Untergrund auflegbar ist, und ein zweites Vorrichtungsteil, das in einer schrägen Stellung zum ersten Vorrichtungsteil halterbar ist. Die Solarpaneele und/oder Wärmekollektoren sind anschließend an dem zweiten Vorrichtungsteil in einer schrägen Stellung anordenbar. Die Mittel zur Errichtung solcher Vorrichtungen, also insbesondere die vorbezeichneten Vorrichtungsteile, sind üblicherweise aus Stahlprofilen gefertigt.

Entsprechende Vorrichtungen haben sich grundsätzlich zwar bewährt. Nachteilig ist jedoch, dass die Herstellung der Stahlprofile für die Vorrichtung relativ aufwendig und damit kostenintensiv ist. Nachteilig ist ferner, dass die Errichtung der Vorrichtung aus den vorbeschriebenen Mitteln verhältnismäßig aufwendig ist, wobei zudem häufig zusätzliche Befestigungsmittel zur Befestigung der Vorrichtung an dem Untergrund notwendig sind. Dies kann insbesondere bei Errichtung der Vorrichtungen auf einem Flachdach nachteilig sein, da die Dachhaut hierfür beschädigt werden muss. Nachteilig ist schließlich auch, dass das zweite Vorrichtungsteil häufig nur kompliziert in eine definierte schräge Stellung zum ersten Vorrichtungsteil bringbar und in dieser Stellung halterbar ist.

Aus DE 698 15 168 T2 ist eine Vorrichtung in Form einer Kunststoffbox bekannt, auf deren Oberseite Solarpaneele und/oder Wärmekollektoren in einer Schrägstellung anordenbar sind. Diese Boxen benötigen jedoch trotz einer bei Stapelung möglichen Schachtelung ein verhältnismäßig großes Volumen beim Transport zum Aufstellungsort.

Die DE 201 20 983 U offenbart einen Modulträger umfassend zwei Haltebleche mit abgewinkelten Teilen und einen mit diesen Spielfrei verkeilten Beschwerungsstein.

Der vorliegenden Erfindung liegt die Aufgabe zu Grunde, Mittel zur Errichtung einer Vorrichtung zur Anordnung von Solarpaneelen und/oder Wärmekollektoren auf einem Untergrund zur Verfügung zu stellen, die einfach und damit auch kostengünstig produziert werden können. Ferner soll es möglich sein, die Vorrichtung durch die Mittel schnell und einfach auf einem Untergrund errichten zu können. Schließlich sollen die Mittel beim Transport zum Aufstellungsort der Vorrichtung ein möglichst geringes Transportvolumen benötigen.

Zur Lösung dieser Aufgaben wird erfindungsgemäß zur Verfügung gestellt eine Platte zur Errichtung einer Vorrichtung zur Anordnung von Solarpaneelen und/oder Wärmekollektoren auf einem Untergrund, mit den Merkmalen des Anspruchs 1.

Die Grundidee der Erfindung besteht demnach darin, eine Platte als Mittel zur Errichtung einer Vorrichtung zur Anordnung von Solarpaneelen und/oder Wärmekollektoren auf einem Untergrund zu verwenden. Gegenüber den bisher verwendeten Mitteln, beispielsweise in Form der vorbezeichneten Stahlprofile oder Kunststoffboxen, ist die Verwendung einer Platte zur Herstellung einer solchen Vorrichtung mit erheblichen Vorteilen verbunden.

So ist eine Platte regelmäßig sehr einfach und damit kostengünstig herstellbar. Grundsätzlich muss die Platte nur mit geeigneten Knickkanten versehen sein, um erfindungsgemäß als Platte zur Errichtung einer Vorrichtung zur Anordnung von Solarpaneelen und/oder Wärmekollektoren verwendet werden zu können. Ferner lassen sich Platten sehr volumensparend aufeinander stapeln, so dass auch sehr zahlreiche der erfindungsgemäßen Platten mit nur einem geringen Volumen an ihren Aufstellungsort transportiert werden können. Des weiteren ist die Errichtung einer Vorrichtung zur Anordnung von Solarpaneelen und/oder Wärmekollektoren aus der erfindungsgemäßen Platte am Aufstellungsort sehr einfach. Grundsätzlich muss zur Errichtung dieser Vorrichtung aus der erfindungsgemäßen Platte allein der zweite Bereich entlang der ersten Knickkante in eine zum ersten Bereich schräge Stellung geknickt werden und ein oder mehrere weitere Bereiche in eine solche Stellung geknickt werden, dass der zweite Bereich mittels dieser weiteren Bereiche in der Schrägestellung halterbar ist. Diese Errichtung der Vorrichtung ist reversibel, so dass die Vorrichtung, beispielsweise bei deren Um- oder Abbau, schnell und einfach wieder abgebaut werden kann.

Der erste Bereich der erfindungsgemäßen Platte erfüllt insbesondere zwei Funktionen. Zum einen dient er als Aufstellfläche für die aus der erfindungsgemäßen Platte errichtbare Vorrichtung zur Anordnung von Solarpaneelen und/oder Wärmekollektoren. Zum anderen dient er gleichzeitig als Auflagefläche für Mittel, durch die die errichtbare Vorrichtung beschwerbar ist. Demnach kann vorgesehen sein, dass der erste Bereich der Platte derart konfektioniert ist, dass auf diesen Mittel zur Beschwerung der aus der Platte errichtbaren Vorrichtung auflegbar sind. Diese Beschwerungsmittel, beispielsweise in Form von Steinplatten, Metallplatten oder Kies, dienen zur Beschwerung der aus der Platte errichtbaren Vorrichtung, so dass diese auch bei Windeinwirkung sicher auf einem Untergrund steht.

Die Knickkanten, entlang derer die Platte knickbar ist, verlaufen bevorzugt linear. Bevorzugt sind die Knickkanten jeweils in Form einer Materialschwächung vorgesehen, beispielsweise in Form einer Perforierung oder einer Prägung. Gegebenenfalls können die Knickkanten auch als Folienscharnier ausgebildet sein. Entscheidend ist allein, dass die Platte entlang der Knickkanten wesentlich leichter knickbar ist als in ihren übrigen Abschnitten. Bevorzug mündet jede Knickkante an ihren beiden Enden in eine Seitenkante der Platte, so dass die Platte entlang der Knickkanten besonders leicht knickbar ist.

Der zweite Bereich der Platte dient als Auflage für an der durch die Platte errichtbaren Vorrichtung anordenbare Solarpaneele und/oder Wärmekollektoren. In der schrägen Stellung des zweiten Bereiches verlaufen die jeweiligen Hauptoberflächen von erstem und zweitem Bereich schräg, also winklig zueinander. Indem die aus der Platte errichtete Vorrichtung mit ihrem ersten Bereich nunmehr auf einem Untergrund aufgestellt wird, verläuft der zweite Bereich in seiner schrägen Stellung schräg zum Untergrund, so dass Solarpaneele und/oder Wärmekollektoren in einer schrägen Stellung an dem zweiten Bereich anordenbar sind. Diese schräge Stellung des zweiten Bereiches ist durch die weiteren Bereiche definierbar und einstellbar. Konkret sind der oder die weiteren Bereiche derart dimensioniert, dass sie über ihre jeweiligen Knickkanten jeweils in eine solche Stellung knickbar sind, dass der zweite Bereich mittels der weiteren Bereiche in der aus der Platte errichtbaren Vorrichtung in einer definierten schrägen Stellung halterbar ist.

Der zweite Bereich ist insbesondere derart in eine schräge Stellung knickbar, dass der zweite Bereich den ersten Bereich zumindest abschnittsweise überdeckt. Der zweite Bereich weist demnach eine dem ersten Bereich zugewandte und eine dem ersten Bereich abgewandte Hauptoberfläche auf. Bevorzugt schließen der erste und der zweite Bereich - zumindest abschnittsweise - einen spitzen Winkel zwischen sich ein. Insgesamt ergibt sich damit ein im Wesentlichen keilförmiger Aufbau der durch die erfindungsgemäße Platte errichtbaren Vorrichtung.

Bevorzugt ist vorgesehen, dass in dem Abschnitt des ersten Bereiches, der durch den zweiten Bereich überdeckbar ist, Mittel zur Beschwerung der Vorrichtung anordenbar sind. Nach einer Fortführung dieses Erfindungsgedankens kann vorgesehen sein, dass die weiteren Bereiche derart knickbar sind, dass sie diesen Abschnitt seitlich begrenzen. Auf diese Weise ist durch den ersten Bereich, den zweiten Bereich sowie die weiteren Bereiche in der durch die Platte errichtbaren Vorrichtung ein Raum ausbildbar, der beispielsweise mit einem Schüttgut, beispielsweise Kies, zur Beschwerung der Vorrichtung befüllbar ist.

Die weiteren Bereiche sind Bestandteil der Platte und über ihre jeweilige Knickkante mit dieser beziehungsweise mit einem Bereich der Platte verbunden. Die weiteren Bereiche können über ihre jeweilige Knickkante insbesondere mit dem ersten Bereich und/oder dem zweiten Bereich verbunden sein. Die weiteren Bereiche können beispielsweise in Form aufklappbarer Flügel oder Zungen vorgesehen sein.

Bevorzugt ist vorgesehen, dass die weiteren Bereiche derart ausgebildet sind, dass sie, wenn sie in ihrer geknickten Stellung in der errichtbaren Vorrichtung den zweiten Bereich in der schrägen Stellung halten, mit einer freien Seitenkante flächig an einer korrespondierenden Fläche des ersten oder zweiten Bereiches anliegen. Hierdurch kann die durch die weiteren Bereiche aufzunehmende Last gleichmäßig abgeleitet werden.

Die weiteren Bereiche sind derart an der Platte angeordnet, dass in der durch die Platte errichtbaren Vorrichtung der zweite Bereich mittels der weiteren Bereiche in der schrägen Stellung auf dem ersten Bereich abstützbar ist.

Nach einer Ausführungsform ist vorgesehen, dass die Platte Öffnungen aufweist, die zur Anordnung von Befestigungsmitteln an der durch die Platte errichtbaren Vorrichtung dienen. Durch die Anordnung von Befestigungsmitteln an der durch die Platte errichtbaren Vorrichtung ist es möglich, den zweiten Bereich in seiner schrägen Stellung zu fixieren. Entsprechende Befestigungsmittel können beispielsweise in Form von Schrauben vorgesehen sein.

Gemäß der Erfindung ist vorgesehen, dass der zweite Bereich mehrere weitere Bereiche aufweist, die jeweils um eine Knickkante mit dem zweiten Bereich der Platte verbunden sind und die entlang dieser Knickkante jeweils in eine solchen Stellung knickbar sind, dass der zweite Bereich in der durch die Platte errichtbaren Vorrichtung mittels der weiteren Bereiche in der schrägen Stellung auf dem ersten Bereich abstützbar ist. Der zweite Bereich ist über zwei weitere Bereiche auf dem ersten Bereich abstützbar.Diese weiteren, vom zweiten Bereich abknickbaren weiteren Bereiche, liegen mit ihren Seitenkanten in der schrägen Stellung auf dem ersten Bereich auf.

Bevorzugt sind die weiteren Bereiche spiegelsymmetrisch zu einer Längsachse der Platte, die senkrecht zur ersten Knickkante verläuft, angeordnet. Diese symmetrische Anordnung der weiteren Bereiche hat eine sehr gleichmäßige Lastverteilung in der durch die Platte errichtbaren Vorrichtung zu Folge. Insbesondere, soweit an dem zweiten Bereich zwei weitere Bereiche vorgesehen sind, kann vorgesehen sein, dass die Knickkanten der weiteren Bereiche schräg zu der Längsachse der Platte, die bevorzugt durch die Mitte der ersten Knickkante und senkrecht zu dieser verläuft, angeordnet sind und bevorzugt von der ersten Knickkante weg schräg zur Längsachse hin verlaufen. Bei dieser Ausführungsform gleichen die weiteren Bereiche zwei symmetrisch an dem zweiten Bereich angeordneten Flügeln, die von dem weiteren Bereich abknickbar sind und über die der zweite Bereich auf dem ersten Bereich abstützbar ist.

Soweit die weiteren Bereiche an dem zweiten Bereich angeordnet sind, kann vorgesehen sein, dass der erste Bereich Mittel zur Fixierung der weiteren Bereiche aufweist. Beispielsweise kann der erste Bereich aufklappbare Zungen aufweisen, die aus dem ersten Bereich ausgestanzt sind und über eine Knickkante in Verbindung mit dem ersten Bereich stehen. Diese Zungen können insbesondere derart dimensioniert sein, dass die weiteren Bereiche in der schrägen Stellung des zweiten Bereiches über Befestigungsmittel an den Zungen fixierbar sind, beispielsweise mittels Schrauben. Zur Anordnung von Befestigungsmitteln können die Zungen und die weiteren Bereiche Öffnungen aufweisen, die in der durch die Platte errichtbaren Vorrichtung miteinander fluchten, so dass Befestigungsmittel, insbesondere Schrauben, durch die fluchtenden Öffnungen hindurchgeführt werden können.

Der zweite Bereich kann in seinem zur ersten Knickkante benachbarten Abschnitt eine zur ersten Knickkante beabstandet und parallel hierzu verlaufende Knickkante aufweisen. Hierdurch ist fußseitig des zweiten Bereiches in dem Abschnitt, in dem der zweite Bereich über die erste Knickkante mit dem ersten Bereich verbunden ist, in der aus der Platte errichtbaren Vorrichtung ein Sockel ausbildbar. Dieser Sockel dient insbesondere dazu, ein Beschwerungsmittel in Form eines Schüttgutes, das in den Abschnitt des ersten Bereiches, der vom zweiten Bereich überdeckt ist, eingebracht ist in diesem Abschnitt zu halten.

Nach einer Ausführungsform ist vorgesehen, dass der zweite Bereich eine Öffnung aufweist. Diese Öffnung ist bevorzugt nur in dem Abschnitt des zweiten Bereiches vorgesehen, der nicht durch die weiteren Bereiche gebildet ist, soweit diese an dem zweiten Bereich angeordnet sind. Diese Öffnung im zweiten Bereich dient dazu und ist derart dimensioniert, dass bei der aus der Platte errichtbaren Vorrichtung durch die Öffnung Beschwerungsmitteln auf den Abschnitt des ersten Bereiches, der vom zweiten Bereich überdeckt ist, einbringbar sind.

Die erfindungsgemäße Platte besteht aus Kunststoff, und kann einstückig oder mehrteilig konfektioniert sein.

Nach einer besonders bevorzugten Ausführungsform ist die erfindungsgemäße Platte in Form einer einstückigen Kunststoffplatte mit einem im Wesentlichen rechteckigen Außenumfang vorgesehen. Eine solche Platte ist besonders einfach und kostengünstig herstellbar und volumensparend transportierbar.

Bei einer solch rechteckigen Kunststoffplatte kann die erste Knickkante parallel zu einer Seitenkante der Platte verlaufen. Der erste Bereich kann bevorzugt eine im Wesentlichen rechteckige Form aufweisen, wobei eine der Seiten dieses Rechtecks von der ersten Knickkante gebildet ist. Ebenso kann der zweite Bereich bevorzugt eine im Wesentlichen rechteckige Form aufweisen, wobei wiederum eine der Seiten dieses Rechtecks von der ersten Knickkante gebildet ist. Die bei dieser Ausführungsform gebildeten beiden freien Ecken des Rechtecks des zweiten Bereichs können die zwei weiteren, abknickbaren Bereiche sein. Hieraus ergibt sich eine dreieckige Form der weiteren Bereiche, wobei jeweils eine Seite dieser Dreiecke von der Knickkante gebildet ist, mit der die weiteren Bereiche jeweils mit dem zweiten Bereich verbunden sind.

Eine erfindungsgemäße Platte in Form einer Kunststoffplatte besteht bevorzugt aus einem Witterungs- und UV-beständigen, möglichst biegesteifen Kunststoff. Bevorzugt wird eine Kunststoffplatte aus Polypropylen (PP) verwendet. Nach einer bevorzugten Ausführungsform wird für die erfindungsgemäße Platte eine Kunststoffplatte in Form einer Strukturkammerplatte verwendet. Strukturkammerplatten bestehen aus zwei ebenen Kunststoffdeckschichten, zwischen denen eine strukturierte Kunststoffmittelschicht angeordnet ist. Die Kunststoffmittelschicht kann beispielsweise genoppt oder profiliert ausgebildet sein. Entsprechend ausgebildete Strukturkammerplatten zeichnen sich durch eine sehr hohe Festigkeit, insbesondere eine hohe Biegesteifigkeit, bei einem gleichzeitig nur verhältnismäßig geringen Gewicht aus. Erfindungsgemäß hat sich herausgestellt, das entsprechende Kunststoffstrukturkammerplatte hervorragend zur Errichtung von Vorrichtungen zur Anordnung von Solarpaneelen und/oder Wärmekollektoren verwendet werden können.

Bevorzugt können Kunststoffplatten mit einer Dicke im Bereich zwischen 4 und 7 mm und bevorzugt mit einem Flächengewicht im Bereich zwischen 1.000 und 2.500 g/m³ eingesetzt werden.

Nach einer Ausführungsform ist vorgesehen, dass die Platte entlang der Knickkanten derart in eine Transportstellung knickbar ist, dass der Außenumfang der geknickten Patte in der Transportstellung den Außenumfang einer Europalette nicht übersteigt und beispielsweise dem Außenumfang einer Europalette entspricht. Dies hat den besonderen Vorteil, dass mehrere der erfindungsgemäßen, entsprechend in die Transportstellung geknickten Platten einfach auf einer Europalette stapelbar sind.

Nach einer Ausführungsform kann vorgesehen sein, dass der erste Bereich über eine zweite Knickkante mit einem dritten Bereich der Platte verbunden ist, wobei der dritte Bereich entlang der zweiten Knickkante in eine solche Stellung knickbar ist, dass der dritte Bereich den zweiten Bereich auf seiner dem ersten Bereich abgewandten Seite zumindest teilweise überdeckt, wenn sich der zweite Bereich in der durch die Platte errichtbaren Vorrichtung in der schrägen Stellung befindet.

Der dritte Bereich hat insbesondere zwei Funktionen. Zum einen kann er in der durch die Platte errichtbaren Vorrichtung als weitere Auflage für Solarpaneele und/oder Wärmekollektoren dienen. Zum zweiten dient er der zusätzlichen Versteifung der aus der Platte errichtbaren Vorrichtung. Hierzu kann der dritte Bereich entlang der zweiten Knickkante in eine solche Stellung knickbar sein, dass er in der schrägen Stellung des zweiten Bereiches an diesem fixierbar ist. Insbesondere kann hierzu vorgesehen sein, dass der dritte Bereich den zweiten Bereich auf seiner dem ersten Bereich abgewandten Seite zumindest teilweise überdeckt. Der Abschnitt des dritten Bereiches, der den zweiten Abschnitt zumindest teilweise überdeckt, kann beispielsweise durch eine Knickkante mit dem übrigen Abschnitt des dritten Bereiches verbunden sein.

Im Falle eines rechteckig augebildeten ersten Bereiches können die erste und die zweite Knickkante zwei gegenüberliegende Seiten des ersten Bereiches bilden.

Der zweite Bereich und der dritte Bereich können derart ausgebildet sein, dass sie in der aus der Platte errichtbaren Vorrichtung miteinander korrespondierende Fixierungshilfen aufweisen. Insoweit können der zweite Bereich und der dritte Bereich beispielsweise miteinander fluchtetende Öffnungen aufweisen. Durch diese fluchtenden Öffnungen können Befestigungsmittel, beispielsweise Schrauben, zur Fixierung von zweitem und drittem Bereich gegeneinander geführt werden.

Die Platte kann Öffnungen, insbesondere beispielsweise Löcher oder Schlitze, aufweisen, durch die bei der durch die Platte errichtbaren Vorrichtung Befestigungsmittel zur Befestigung von Solarpaneelen und/oder Wärmekollektoren geführt werden können.

Gegenstand der Erfindung ist ferner eine Vorrichtung zur Anordnung von Solarpaneelen und/oder Wärmekollektoren auf einem Untergrund, wobei diese Vorrichtung aus einer wie vorstehend beschriebenen Platte errichtet ist.

Gegenstand der Erfindung ist ferner die Verwendung einer wie vorstehend beschriebenen Platte zur Errichtung einer Vorrichtung zur Anordnung von Solarpaneelen und/oder Wärmekollektoren auf einem Untergrund.

Diese Verwendung erfolgt mit der Maßgabe, dass der zweite Bereich entlang der ersten Knickkante in eine zum ersten Bereich schräge Stellung geknickt wird und die weiteren Bereiche über ihre jeweilige Knickkante, über die sie mit der Platte verbunden sind, in eine solche Stellung geknickt werden, dass der zweite Bereich mittels der weiteren Bereiche in der schrägen Stellung auf dem ersten Bereich abgestützt ist.

Gegenstand der Erfindung ist schließlich ein Verfahren zur Errichtung einer Vorrichtung zur Anordnung von Solarpaneelen und/oder Wärmekollektoren auf einem Untergrund, bei dem bei einer wie vorstehend beschriebenen Platte der zweite Bereich entlang der ersten Knickkante in eine zum ersten Bereich schräge Stellung geknickt wird und die weiteren Bereiche über ihre jeweilige Knickkante, über die sie mit der Platte verbunden sind, in eine solche Stellung geknickt werden, dass der zweite Bereich mittels der weiteren Bereiche in der schrägen Stellung auf dem ersten Bereich abgestützt ist.

Die aus der erfindungsgemäßen Platte errichtbare Vorrichtung kann insbesondere zur Anordnung von Solarpaneelen, Wärmekollektoren oder entsprechenden Befestigungsmitteln hierfür, beispielsweise Befestigungsrahmen oder -schienen, verwendet werden. Es liegt jedoch auch im Rahmen der Erfindung, die aus der erfindungsgemäßen Platte errichtbare Vorrichtung zur Anordnung von anderen Gegenständen, wie beispielsweise Demonstrationsmitteln, zu verwenden.

Ein Ausführungsbeispiel der Erfindung soll anhand der nachfolgenden Figurenbeschreibung näher erläutert werden. Dabei zeigt,
- Figur 1: eine erfindungsgemäße Platte in einer perspektivischen Ansicht von schräg oben,
- Figur 2: eine aus der Platte gemäß Figur 1 errichtete Vorrichtung zur Anordnung von Solarpanelen und/oder Wärmekollektoren auf einem Untergrund in einer perspektivischen Ansicht von schräg oben,

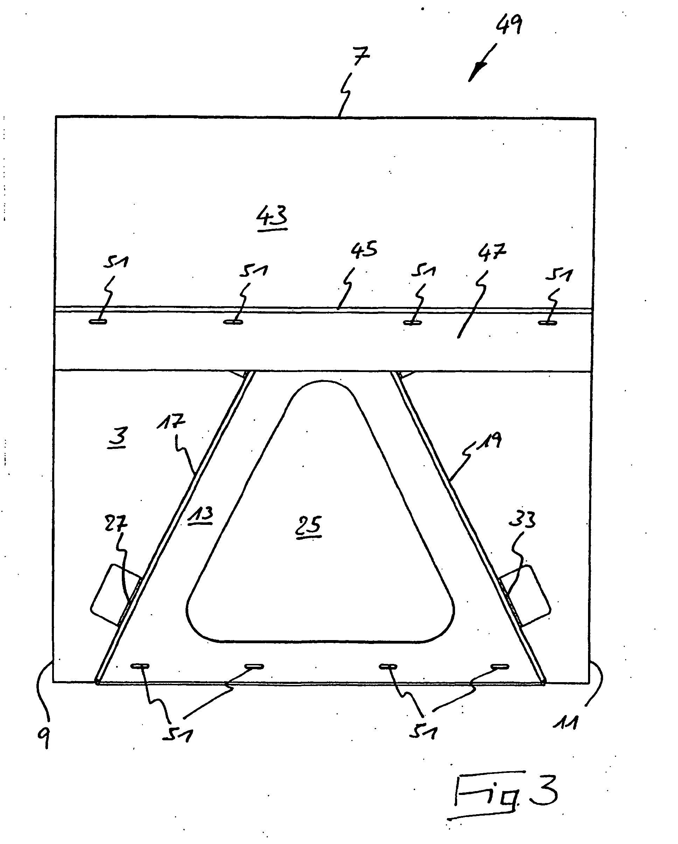

- Figur 3: die Vorrichtung gemäß Figur 2 in einer Ansicht von oben,

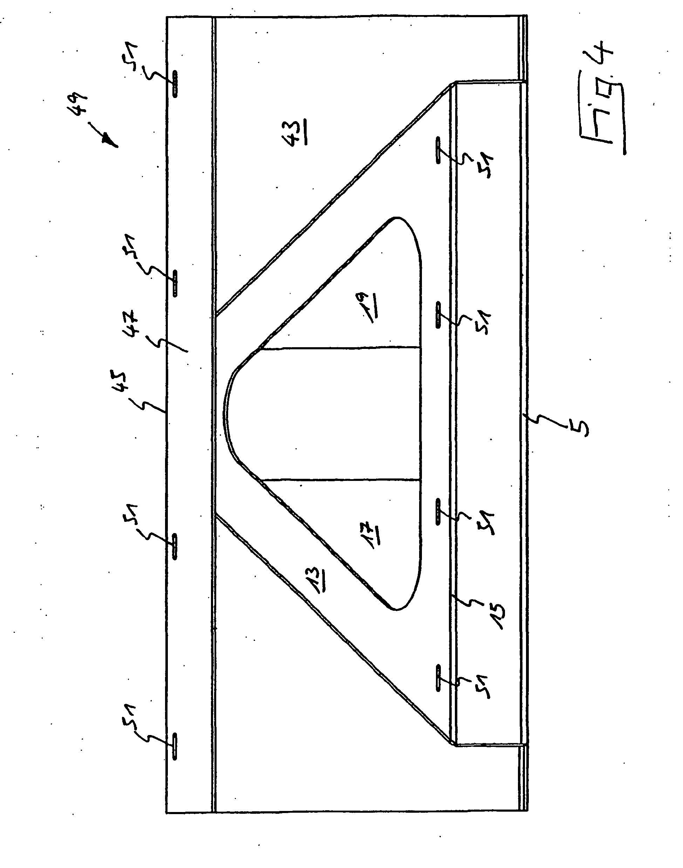

- Figur 4: die Vorrichtung gemäß Figur 2 in einer Ansicht von vorne und

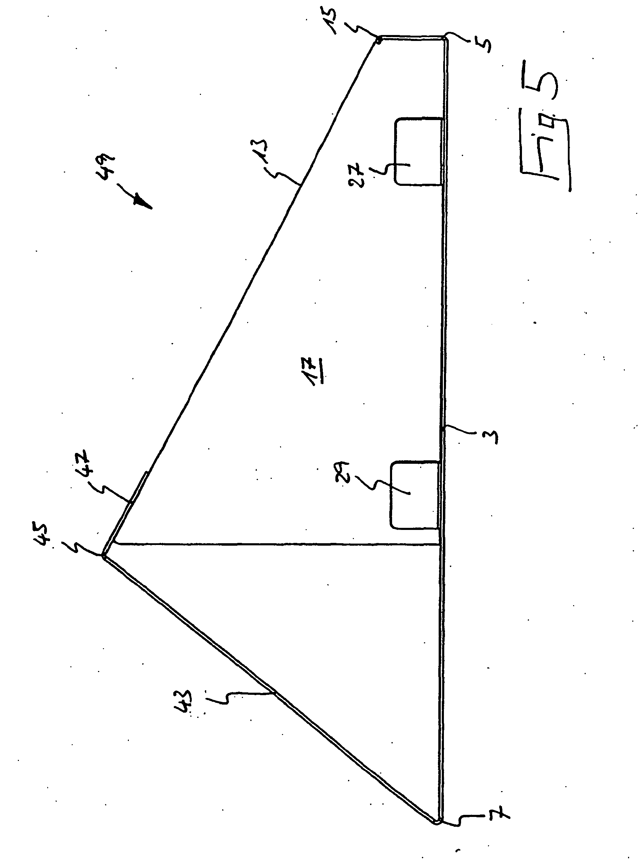

- Figur 5: die Vorrichtung gemäß Figur 2 in einer Ansicht von der Seite.

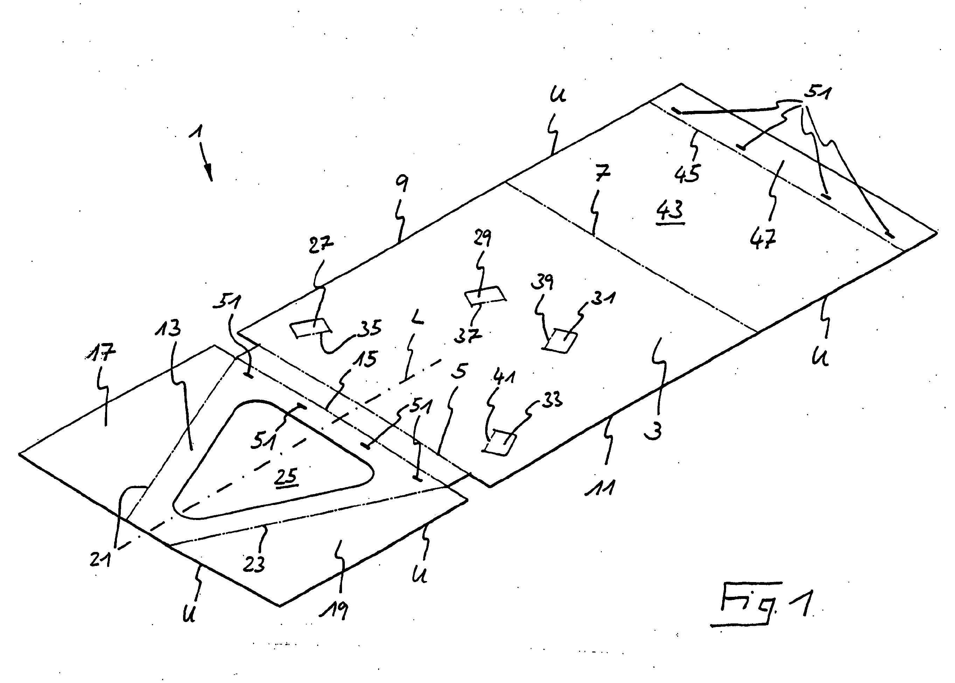

Die in Figur 1 mit dem Bezugszeichen 1 versehene Platte dient zur Errichtung einer Vorrichtung zur Anordnung von Solarpaneelen und/oder Wärmekollektoren auf einem Untergrund. Die Platte 1 ist einstückig aus einer Kunststoffstrukturkammerplatte aus Propylen gefertigt und weist einen im Wesentlichen rechteckigen Außenumfang U auf. Bei einem Flächengewicht von 1.500 g/m² weist die Platte 1 eine Dicke von etwa 5,4 mm auf.

Die Platte 1 weist einen rechteckigen, ersten Bereich 3 auf. Die Seiten dieses Rechtecks dieses ersten Bereiches 3 sind gebildet aus einer ersten Knickkante 5, einer zweiten Knickkante 7, die die der ersten Knickkante 5 gegenüberliegende Seite des Rechtecks des ersten Bereichs 3 darstellt, und den zwei gegenüberliegenden Seitenkanten 9 und 11, die gleichzeitig Abschnitte des Außenumfangs U der Platte 1 darstellen. Der erste Bereich 3 ist über die erste Knickkante 5 mit einem zweiten Bereich 13 der Platte 1 verbunden. Der zweite Bereich 13 weist ebenfalls im Wesentlichen die Form eines Rechtecks auf, wobei eine der Seiten dieses Rechtecks durch die erste Knickkante 5 gebildet ist. Die drei übrigen Seiten des Rechtecks des zweiten Bereichs 13 sind Abschnitte des Außenumfangs U der Platte 1. In seinem zur ersten Knickkante 5 benachbarten Abschnitt weist der zweite Bereich eine weitere, zur ersten Knickkante 5 beabstandet und parallel hierzu verlaufenden Knickkante 15 auf. An dem zweiten Bereich 13 sind zwei weitere Bereiche 17, 19 angeordnet, die jeweils über eine Knickkante 21, 23 mit dem zweiten Bereich 13 verbunden sind. Die weiteren Bereiche 17, 19 sind spiegelsymmetrisch zu einer Längsachse L der Platte 1, die senkrecht zur und mittig durch die erste Knickkante 15 verläuft, angeordnet. Die Knickkanten 21, 23 der weiteren Bereiche 17, 19 verlaufen spiegelsymmetrisch zu dieser Längsachse L von der ersten Knickkante 5 weg schräg zur Längsachse L hin.

In dem Abschnitt des zweiten Bereiches 13, der nicht durch die weiteren Bereiche 17, 19 gebildet ist, weist der zweite Bereich 13 eine im Wesentlichen dreieckige Öffnung 25 auf.

Der erste Bereich 3 weist vier aufklappbare Zungen 27, 29, 31, 33 auf, die aus dem ersten Bereich 3 ausgestanzt sind und jeweils über eine Knickkante 35, 37, 39, 41 in Verbindung mit dem ersten Bereich 3 stehen.

Über die zweite Knickkante 7 ist der erste Bereich mit einem dritten Bereich 43 der Platte verbunden. Der dritte Bereich 43 weist eine im Wesentlichen rechteckige Form auf, wobei eine der Seiten dieses Rechtecks durch die zweite Knickkante 7 und die übrigen drei Seiten durch Seitenkanten gebildet sind, die Abschnitten des Außenumfangs U der Platte 1 entsprechen. An seinem der zweiten Knickkante 7 gegenüberliegenden Abschnitt weist der dritte Bereich 43 eine parallel zur zweiten Knickkante 7 verlaufende Knickkante 45 auf. Hiermit ist an diesem freien Ende des dritten Bereiches 43 ein abknickbarer Abschnitt 47 ausgebildet.

Zur Errichtung einer Vorrichtung zur Anordnung von Solarpanelen und/oder Wärmekollektoren aus der Platte 1 gemäß Figur 1 wird der zweite Bereich 13 entlang der ersten Knickkante 5 in eine zum ersten Bereich 3 schräge Stellung geknickt. Die weiteren Bereiche 17, 19 werden über ihre jeweilige Knickkante 21, 23 in eine solche Stellung geknickt, dass der zweite Bereich 13 mittels der zwei weiteren Bereichen 17, 19 in der schrägen Stellung auf dem ersten Bereich 3 abgestützt ist. Nachdem der zweite Bereich 13 mittels der weiteren Bereiche 17, 19 entsprechend auf dem ersten Bereich 3 abgestützt ist, werden die vier Zungen 27, 29, 31, 33 hochgeklappt. Dabei sind die vier Zungen 27, 29, 31, 33 derart am ersten Bereich 3 angeordnet, dass sie flächig gegen die weiteren Bereiche 17, 19 anliegen, wenn sich der zweite Bereich 13 über die weiteren Bereiche 17, 19 auf dem ersten Bereich 3 abstützt. Im Ausführungsbeispiel weisen die weiteren Bereiche 17, 19 sowie die vier Zungen 27, 29, 31, 33 korrespondierende Befestigungsmittel in Form von Klettverschlüssen auf, so dass die vier Zungen 27, 29, 31, 33 mittels der Klettverschlüsse fest mit den weiteren Bereichen 17, 19 verbunden sind, wenn sie flächig gegen die weiteren Bereiche 17, 19 anliegen.

Nachdem der zweite Bereich 13 wie vorstehend in der schrägen Stellung abgestützt ist, wird der dritte Bereich 43 entlang der zweiten Knickkante 7 in Richtung des zweiten Bereichs 13 geknickt, bis der abknickbare Abschnitt 47 des dritten Bereichs 43 den zweiten Bereich 13 teilweise überdeckt.

Zur Fixierung des dritten Bereiches 43 am zweiten Bereich 13 weisen der abknickbare Abschnitt 47 und der zweite Bereich 13 korrespondierende Befestigungsmittel in Form von Klettverschlüssen auf, über die sie miteinander verbunden sind, wenn der abknickbare Abschnitt 47 den zweiten Bereich 13 teilweise überdeckt.

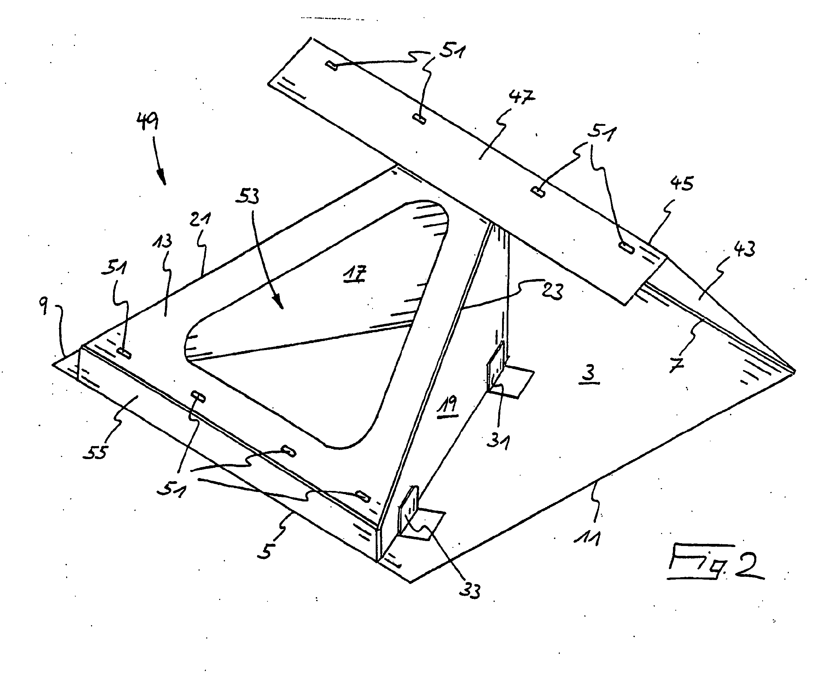

Eine entsprechend aus der Platte 1 errichtete Vorrichtung 49 ist in Figur 2 dargestellt. Gut zu erkennen ist in Figur 2, wie der zweite Bereich 13 durch die weiteren Bereiche 17, 19 in einer schrägen Stellung gehalten ist, so dass der zweite Bereich 13 eine schräge Fläche zur Anordnung von Solarpanelen und/oder Wärmekollektoren bietet.

Bei diesem Ausführungsbeispiel ist vorgesehen, dass Solarpaneele und/oder Wärmekollektoren über Stahlschienen an der Vorrichtung 49 angeordnet werden. Hierzu weisen der zweite Bereich 13 sowie der vom dritten Bereich abknickbare Abschnitt 47 Langlöcher 51 auf, durch die Befestigungsmittel zur Befestigung von Stahlschienen führbar sind.

Gut zu erkennen ist in Figur 2 ferner, dass von dem Abschnitt des ersten Bereiches 3, der vom zweiten Bereich 13 überdeckt ist, dem zweiten Bereich 13 und den weiteren Bereichen 17, 19 ein Raum 53 ausgebildet ist. In diesen Raum 53 sind durch die im zweiten Bereich 13 vorhandene Öffnung 25 Beschwerungsmittel zur Beschwerung der Vorrichtung 49 einbringbar. An dem Abschnitt des zweiten Bereiches 13, an dem dieser mit dem ersten Bereich 3 verbunden ist, ist durch die erste Knickkante 5 und die parallel hierzu verlaufende Knickkante 15 ein Sockel 55 ausgebildet, der ein etwaig in den Raum 53 eingebrachtes Beschwerungsmittel in Form eines Schüttgutes zurückhält.

## Patentansprüche

1. Platte aus Kunststoff zur Errichtung einer Vorrichtung zur Anordnung von Solarpaneelen und/oder Wärmekollektoren auf einem Untergrund mit folgenden Merkmalen:
Knickkanten (5, 7, 21, 23, 45), entlang derer die Platte (1) knickbar ist;
einem ersten Bereich (3), der über eine erste Knickkante (5) mit einem zweiten Bereich (13) der Platte (1) verbunden ist;
der zweite Bereich (13) ist entlang der ersten Knickkante (5) in eine zum ersten Bereich (3) schräge Stellung knickbar;
mehreren weiteren Bereichen (17, 19), die jeweils über eine Knickkante (21, 23) in eine solche Stellung knickbar sind, dass der zweite Bereich (13) mittels der weiteren Bereiche (17, 19) in der schrägen Stellung halterbar ist, wobei der zweite Bereich (13) zwei weitere Bereiche (17, 19) aufweist, die jeweils über eine Knickkante (21, 23) mit dem zweiten Bereich (13) der Platte (1) verbunden sind und die entlang dieser Knickkanten (21, 23) jeweils in eine solche Stellung knickbar sind, dass der zweite Bereich (13) mittels der weiteren Bereiche (17, 19) in der schrägen Stellung auf dem ersten Bereich (3) abstützbar ist.

2. Platte nach Anspruch 1, bei der die weiteren Bereiche (17, 19) spiegelsymmetrisch zu einer Längsachse (L) der Platte (1), die senkrecht zur ersten Knickkante (5) verläuft, angeordnet sind.

3. Platte nach Anspruch 1, bei der der erste Bereich (3) Mittel (27, 29, 31, 33) zur Fixierung der weiteren Bereiche (17, 19) aufweist.

4. Platte nach Anspruch 1 in Form einer einstückigen Kunststoffplatte (1) mit einem im wesentlichen rechteckigen Außenumfang (U).

5. Platte nach Anspruch 1, bei der der zweite Bereich (13) eine Öffnung (25) aufweist.

6. Platte nach Anspruch 1, bei der der erste Bereich (3) über eine zweite Knickkante (7) mit einem dritten Bereich (43) der Platte (1) verbunden ist, wobei der dritte Bereich (43) entlang der zweiten Knickkante (7) in eine solche Stellung knickbar ist, dass der dritte Bereich (43) den zweiten Bereich (13) in der schrägen Stellung auf seiner dem ersten Bereich (3) abgewandten Seite zumindest teilweise überdeckt.

7. Vorrichtung zur Anordnung von Solarpaneelen und/oder Wärmekollektoren auf einem Untergrund, errichtet aus einer Platte (1) nach Anspruch 1.

8. Verwendung einer Platte nach Anspruch 1 zur Errichtung einer Vorrichtung zur Anordnung von Solarpaneelen und/oder Wärmekollektoren auf einem Untergrund.

9. Verwendung nach Anspruch 8 mit der Maßgabe, dass der zweite Bereich (13) entlang der ersten Knickkante (5) in eine zum ersten Bereich (3) schräge Stellung geknickt wird und die weiteren Bereiche (17, 19) über ihre jeweilige Knickkante (21, 23), über die sie mit der Platte (1) verbunden sind, in eine solche Stellung geknickt werden, dass der zweite Bereich (13) mittels der weiteren Bereiche (17, 19) in der schrägen Stellung auf dem ersten Bereich (3) abgestützt wird.

10. Verfahren zur Errichtung einer Vorrichtung zur Anordnung von Solarpaneelen und/oder Wärmekollektoren auf einem Untergrund, bei dem bei einer Platte (1) nach Anspruch 1 der zweite Bereich (13) entlang der ersten Knickkante (5) in eine zum ersten Bereich (3) schräge Stellung geknickt wird und die weiteren Bereiche (17, 19) über ihre jeweilige Knickkante (21, 23), über die sie mit der Platte (1) verbunden sind, in eine solche Stellung geknickt werden, dass der zweite Bereich (13) mittels der weiteren Bereiche (17, 19) in der schrägen Stellung auf dem ersten Bereich (3) abgestützt wird.

## Claims

1. A plastic plate for erecting a device for arranging solar panels and/or heat collectors on a substrate with the following features:
Folding edges (5, 7, 21, 23, 45) along which the plate (1) can be folded;
a first area (3) joined by way of a first folding edge (5) with a second area (13) of the plate (1);
the second area (13) can be folded along the first folding edge (5) in into a position inclined relative to the first area (3);
several other areas (17, 19), which can each be folded by way of a folding edge (21, 23) into a position where the second area (13) can be mounted in the inclined position by means of the additional areas (17, 19), wherein the second area (13) exhibits two other areas (17, 19) that are each connected by way of a folding edge (21, 23) with the second area (13) of the plate (1), and can be folded along these folding edges (21, 23) into a respective position where the second area (13) can be supported in the inclined position against the first area (3) by means of the other areas (17, 19).

2. The plate according to claim 1, wherein the other areas (17, 19) are arranged mirror-symmetrically to a longitudinal axis (L) of the plate (1), which runs perpendicular to the first folding edge (5).

3. The plate according to claim 1, wherein the first area (3) exhibits means (27, 29, 31, 33) for fixing the other areas (17, 19) in place.

4. The plate according to claim 1 in the form of a one-piece plastic plate (1) with an essentially rectangular outer periphery (U).

5. The plate according to claim 1, wherein the second area (13) exhibits an opening (25).

6. The plate according to claim 1, wherein the first area (3) is connected by way of a second folding edge (7) with a third area (43) of the plate (1), wherein the third area (43) can be folded along the second folding edge (7) into a position where the third area (43) at least partially covers the second area (13) in the inclined position on its side facing away from the first area (3).

7. A device for arranging solar panels and/or heat collectors on a substrate, erected using a plate (1) according to claim 1.

8. Use of a plate according to claim 1 for erecting a device for arranging solar panels and/or heat collectors on a substrate.

9. Use according to claim 8, with the proviso that the second area (13) is folded along the first folding edge (5) into a position inclined relative to the first area (3), and the other areas (17, 19) are folded by way of their respective folding edge (21, 23) that connects them with the plate (1) into a position where the second area (13) is supported in the inclined position against the first area (3) by means of the other areas (17, 19).

10. A method for erecting a device for arranging solar panels and/or heat collectors on a substrate, in which in a plate (1) according to claim 1, the second area (13) is folded along the first folding edge (5) into a position inclined relative to the first area (3), and the other areas (17, 19) are folded by way of their respective folding edge (21, 23) that connects them with the plate (1) into a position where the second area (13) is supported in the inclined position against the first area (3) by means of the other areas (17, 19).

## Revendications

1. Plaque en plastique pour ériger un dispositif pour disposer des panneaux solaires et/ou des collecteurs de chaleur sur un fond avec les caractéristiques suivantes :
des arêtes de pliage (5,7,21,23,45), le long de laquelle la plaque (1) peut être pliée ;
une première zone (3), qui est reliée par l'intermédiaire d'une première arête de pliage (5) à une deuxième zone (13) de la plaque (1) ;
la deuxième zone (13) peut être pliée le long de la première arête de pliage (5) dans une position inclinée par rapport à la première zone (3),
plusieurs autres zones (17,19), qui peuvent être pliées respectivement par l'intermédiaire d'une arête de pliage (21,23) dans une position telle que la deuxième zone (13) puisse être maintenue dans la position inclinée, dans laquelle la deuxième zone (13) présente deux zones supplémentaires (17,19), qui sont respectivement reliées par l'intermédiaire d'une arête de pliage (21,23) à la deuxième zone (13) de la plaque (1) et qui peuvent être pliées le long de ces arêtes de pliage (21,23) dans une position telle que la deuxième zone (13) puisse être appuyée au moyen des zones supplémentaires (17,19) dans la position inclinée sur la première zone (3).

2. Plaque selon la revendication 1, dans laquelle les zones supplémentaires (17,19) sont disposées symétriquement par rapport à un axe longitudinal (L) de la plaque (1), qui s'étend perpendiculairement à la première arête de pliage (5).

3. Plaque selon la revendication 1, dans laquelle la première zone (3) présente des moyens (27,29,31,33) pour fixer les zones supplémentaires (17,19).

4. Plaque selon la revendication 1 prenant la forme d'une plaque de plastique (1) en un seul tenant avec une circonférence extérieure essentiellement rectangulaire (U).

5. Plaque selon la revendication 1, dans laquelle la deuxième zone (13) présente une ouverture (25).

6. Plaque selon la revendication 1, dans laquelle la première zone (3) est reliée par l'intermédiaire d'une deuxième arête de pliage (7) à une troisième zone (43) de la plaque (1), dans laquelle la troisième zone (43) peut être pliée le long de la deuxième arête de pliage (7) dans une position telle que la troisième zone (43) recouvre au moins partiellement la deuxième zone (13) dans la position inclinée sur son côté qui se détourne de la première zone (3).

7. Dispositif pour disposer des panneaux solaires et/ou des collecteurs de chaleur sur un fond, érigé sur une plaque (1) selon la revendication 1.

8. Utilisation d'une plaque selon la revendication 1 pour ériger un dispositif pour disposer des panneaux solaires et/ou des collecteurs de chaleur sur un fond.

9. Utilisation selon la revendication 8, **caractérisé en ce que** la deuxième zone (13) est pliée le long de la première arête de pliage (5) dans une position inclinée par rapport à la première zone (3) et **en ce que** les zones supplémentaires (17,19) par l'intermédiaire de leur arête de pliage respective (21,23), par l'intermédiaire desquelles elles sont reliées à la plaque (1), sont pliées dans une position telle que la deuxième zone (13) soit appuyée au moyen des zones supplémentaires (17,19) dans la position inclinée sur la première zone (3).

10. Procédé d'érection d'un dispositif pour disposer des panneaux solaires et/ou des collecteurs de chaleur sur un fond, dans lequel sur une plaque (1) selon la revendication 1 la deuxième zone (13) est pliée le long de la première arête de pliage (5) dans une première position inclinée par rapport à la première zone (3) et les zones supplémentaires (17,19) sont pliées par l'intermédiaire de leur arête de pliage respective (21,23) par l'intermédiaire de laquelle elles sont reliées à la plaque (1) dans une position telle que la deuxième zone (13) est appuyée au moyen des zones supplémentaires (17,19) dans la position inclinée sur la première zone (3).
